# EUROPEAN PATENT SPECIFICATION

(11) **EP 1 001 684 B1**
(45) Date of publication and mention of the grant of the patent: **28.07.2004**
(21) Application number: 98928483.1
(22) Date of filing: 06.07.1998
(51) Int. Cl.: A23L 1/2165, A23L 1/01

(54) **DEHYDRATED POTATO PIECES AND METHODS FOR THEIR PREPARATION**
DEHYDRATISIERTE KARTOFFELSTÜCKCHEN UND VERFAHREN ZU DEREN HERSTELLUNG
MORCEAUX DE POMME DE TERRE DESHYDRATES ET LEURS PROCEDES DE PREPARATION

(30) Priority: 24.07.1997 EP 97112718
(43) Date of publication of application: 24.05.2000
(73) Proprietor: ZWEIFEL POMY-CHIPS AG, 8957 Spreitenbach (CH)
(72) Inventor: ALBISSER, Priscilla, CH-8968 Mutschellen (CH); BOEHLER, Guido, CH-8004 Zürich (CH); SCHIESS, Beatrix, CH-8400 Winterthur (CH)
(74) Representative: Blum, Rudolf Emil Ernst
(86) International application number: PCT/IB1998/001030
(87) International publication number: WO 1999/004650

(56) References cited:
- EP-A- 0 019 916
- DE-A- 1 679 267
- DE-A- 3 400 397
- US-A- 3 535 128
- US-A- 4 614 660

## Description

### BACKGROUND OF THE INVENTION

The present invention is related to dehydrated, notably hot-air expanded, potato pieces and methods for their preparation. Specifically, the present invention is related to methods for dehydrating potato chips by hot-air expansion, thus providing low-fat, or no fat, at any rate low-calorie potato chips having a mouthfeel and a texture as well as sensorial properties which are comparable to usual fat containing, fried potato chips.

### BRIEF SUMMARY OF THE INVENTION

Potato chips and potato sticks are quite popular food products, notably for young people. Said products are usually obtained by means of frying methods, whereby the consumer appreciates the pleasant mouthfeel, bite and texture achieved by said method. However, products enjoying a considerable acceptance in view of the above cited properties, are products containing significant amounts of fat and/or oil due to the frying method employed for their production. A product having a significant content of fat, however, has in recent years become rather undesirable, as it does not comply with the latest nutrition criteria. As a result, a comprehensive search for new methods of manufacturing of low-fat or no-fat products was triggered in recent years, whereby said products are expected to be close to the deep-fried products in terms of their sensorial properties.

Such methods are already known in the prior art and comprise among others degreasing or fat removing methods for food products having been obtained by a deep-fat frying method with oil. While the fat content in such products could be considerably reduced by such methods, the obtained products could not convince consumers by their mouthfeel, their texture and bite. This is because during the diverse fat removing procedures, notably of fried vegetable products, not only characteristic flavor compounds are at least partially removed by rinsing, but also the texture of said fried potato products is modified, e.g. softened, respectively. In particular, a lowering of the crispness or a deterioration of the bite is generally not accepted by the consumer.

A dehydration method which is an appropriate alternative to the deep-frying process, and which works essentially without any fat or oil, is the so-called hot-air-expansion. By means of hot-air expansion, an almost complete dehydration of the corresponding food product could be achieved. However, also such dehydrated food products having been obtained by hot-air expansion, in particular potato pieces (potato chips), are quite inferior to their classically obtained, i.e. fried counterparts, when it comes to their texture and bite. They generally appear dry, they do not have the same bite, and finally, in view of their mouthfeel they could not convince neither.

It was therefore an objective of the present invention to provide a method for the preparation of dehydrated potato pieces, e.g. potato chips or sticks, having an improved texture, bite and mouthfeel. In particular, said potato pieces having undergone a hot-air expansion, are expected to display comparable characteristics and properties as the usual chips and sticks obtained by frying in respect of their crispness and their texture.

A further objective of the present invention was to provide dehydrated potato pieces having comparable crispness, bite and texture compared to fried products. Notably, the present invention intended to provide essentially low fat potato pieces.

### DETAILED DESCRIPTION OF THE INVENTION

While there are shown and described presently preferred embodiments of the invention, it is to be distinctly understood that the invention is not limited thereto but may be otherwise variously embodied and practiced within the scope of the claims.

The above set forth objectives were achieved according to the method set forth in claim 1. The preferred embodiments are enumerated in the dependent claims.

On the one side, the inventive dehydration method intends to achieve a far reaching removal of moisture from the potato pieces by means of hot-air expansion, so that dried potato pieces, having a final moisture content of less than 4 % by weight could be obtained. On the other side, said dehydrated potato pieces are intended to have the same crisp texture that consumers appreciate with traditional fried and fat-containing products. The characteristic airy texture, which is for instance achieved with potato chips, is achieved by rapid, vigorous departure of the potatoe's moisture. By means of a rapid heat-up of the potato pieces, the dehydration does not take place by diffusion of the potatoe's moisture to the corresponding surface, where said moisture could evaporate, instead tiny moisture vapor blisters are formed within the interior of the potato piece, said vapor blisters then rapidly depart from the potato product rather swiftly upon expansion of the product. By this way, a rather airy texture is generated by the traditional frying method, whereby it is intended to imitate said mechanism by hot-air expansion.

The hot air expansion method according to the present invention for dehydrating potato pieces comprises or consists of four essential steps, whereby the potato pieces to be dehydrated are subjected,
a) to a blanching step,
b) a singling step,
c) a pre-drying step and
d) a final drying step.

In the two major embodiments of this invention, the expansion of the potato pieces, being essential for the desired texture, could either be performed in the context of the final drying step d) or in the context of the pre-drying step c).

In a preferred embodiment, the wrinkle- or wave-cut is employed for the manufacturing of hot-air expanded potato pieces, because owing to this technique the potato pieces are less sticking together during the drying procedure, and therefore the singling effort b) could be reduced for this embodiment for which the expansion is taking place in the context of the final drying step d). Also, the final product has a more regular surface structure and an improved texture.

Basically, all kinds of potatoes are suitable for the process according to the invention. For carrying out the inventive hot-air expansion method, the potato pieces, e.g. potato chips are subjected in the context of the first step a) to a blanching procedure, irrespective whether the expansion is taking place in the context of the pre-drying step c) or the final drying step d).

This is because for imitating the traditional frying method by the hot-air expansion method, further to the primary dehydration there is also a cooking procedure necessary, as said cooking procedure is largely responsible for the formation of characteristic flavor compounds. As the dehydration by hot-air expansion does actually not comprise any cooking procedure, such a blanching step has to precede the actual hot-air expansion. Further to avoiding brown coloration, the blanching also prevents the final product, e.g. the potato chips or sticks from having the taste of a raw potato.

Usually, such potato pieces which are intended to be dehydrated by hot-air expansion are subjected for about 30 seconds to 15 minutes, preferably between 8 to 10 minutes, at a temperature of between 70-100°C, preferably between 80°C-95°C, to said blanching step a).

In order to improve the taste of the final product, the blanching water could be enriched with some salt, preferably with HVP (hydrolyzed vegetable protein). Further flavor agents could also be added. The dosage amounts to about 0-4 weight percent, preferably 1 to 2 weight percent based on the weight of the dry potatoes.

In one major embodiment of the inventive method, the expansion of the potato pieces, takes place in the context of the final drying step d). Thereby, the relevant parameters, e.g. temperature and heating periods, have to be specifically adapted to this major embodiment, whereby the expansion takes place within the context of the final drying step d). The following features, consequently, are only valid for those dehydrating methods where the expansion of the potato pieces is taking place within the context of the final drying step d) :

Hence, in this preferred embodiment, the potato pieces, at first, prior to the pre-drying step c), have to be singled by hand, or alternatively, by means of an appropriate machine, thus preventing the sticking of potato pieces to each other, e.g. of raw potato slices, in an effort to avoid an inhomogeneous drying procedure. It is intended, that by said singling step a so-called monolayer is formed, i.e. a single layer of potato pieces, e.g. slices, which could afterwards be dried.

The ensuing pre-drying step c) comprises or consists of following procedure:
First slow, essentially laminar, hot air, having a temperature of 160-220°C, preferably of 200°C, is circulated around the potato pieces for about 2-6 minutes, and/or
slow, essentially laminar, hot air of a temperature of 80-150°C, preferably about 130°C is circulated around the potato pieces for about 4-12 minutes, and optionally
slow, essentially laminar, hot air, preferably with a controlled moisture content of 50-60 % and being of a temperature of 40-70°C, preferably about 48°C, is circulated around the potato pieces for about 0.5-8 hours,
whereby the pre-dried potato pieces finally display a moisture content of about 9 to 13 % by weight preferably about 10 % by weight.

In a particularly preferred embodiment, the blanched and singled potato pieces are dried in the pre-drying step c) for 4 minutes by laminar, hot air, having a temperature of about 200°C, then for another 9 minutes by essentially laminar, hot air of a temperature of about 130°C and finally for another hour by essentially laminar, hot air of 48°C with a relative moisture degree of 60 % by weight, in order to yield a moisture content of about 10 % by weight.

In the context the fourth step, i.e. the final drying step d), the thus obtained pre-dried potato pieces are dehydrated by high-velocity air of a temperature of about 265-295°C, preferably about 270°C for about 10-36 seconds in order to yield a moisture content of less than 4 % by weight, and whereby the product is simultaneously expanded.

The high-velocity hot air, having a temperature of between 265 to 295°C is preferably generated by the so-called "Torbed" principle: The "Torbed" processor comprises a cylindrical arrangement, whereby a gas stream is generated by fixed paddles, which generates a toroidal particle stream. A homogeneous and steady expansion is taking place owing to both, the spiral stream within the circally formed process room, as well as to the batch process.

Thus, the "Torbed" processor assures a product layer being carried by the impulse of precisely arranged air beams. The arrangement of the paddles within the processor is leading the process medium under an angle, such that a horizontal movement for an intense mixing of the product and air could be generated. The result is a comparably long contact period within the product layer. The high air velocity in the inferior product layer is causing an effective heat transfer.

Preferably, the pre-dried potato pieces are furthermore subjected to an intermediate storage prior to be subjected to the final drying step d), whereby said intermediate storage takes at least one day, preferably at least 7 days and is carried out preferably at room temperature. By the intermediate storage, an equal and regular distribution of moisture within the potato pieces is being assured so that in the context of the ensuing final drying step d) a homogeneous expansion could be achieved.

In the second major preferred embodiment of the inventive hot-air expansion method, the expansion of the potato pieces is achieved in the context of the pre-drying step c). Also in this embodiment, the relevant parameters, e.g. temperature and time periods, are specifically adjusted to this second embodiment, whereby the expansion is already taking place in the context of the pre-drying step c). The following embodiments are therefore only valid for the dehydrating method, whereby the expansion of the potato pieces is taking place in the context of the pre-drying step.

The pre-drying step c) comprises or consists of the following procedure:
First, turbulent, hot air having a temperature of between 130 and 300°C, preferably 240-270°C, and an average air velocity of 1500-6000 m/minute, preferably 3000-4000 m/minute is circulated around the potato pieces for about 1 to 8 minutes, preferably about 1.5-2.5 minutes, and/or
turbulent, hot air having a temperature of between 100 to 200°C, preferably 160-190°C, and an average air velocity of 1500-5000 m/minute, preferably 2500-3500 m/minute is circulated around the potato pieces for about 1 to 6 minutes, preferably about 2-3 minutes, whereby
the potato pieces are steadily singled during the pre-drying step c) by the turbulent hot air, and are dehydrated to yield pieces having a moisture content of about 4 to 35 %, preferably about 10-20 % based on the dried potatoe's weight, and are furthermore expanded.

The rapidly streaming, turbulent hot air, having a temperature of between 130 to 300°C, is preferably generated by the so-called "Jetzone" principle and the pre-drying procedure is preferably taking place in a so-called "Jetzone" drying machine: During the "Jetzone" drying procedure, the potato chips or sticks that are to be dehydrated are put into a continuously working, closed pan or onto a non-perforated conveyor belt, and high-velocity hot air is blown down through a huge number of tubes, whereby said high-velocity hot air hits the bottom of the pan or onto the non-perforated conveyor belt and, thus, generates on the one hand an air layer on which the potato pieces are lying, and on the other side, said air is reflected in a turbulent way, thus generating those turbulent conditions that are desired for the singling step.

By means of the above drying principle, the potato pieces, on the one hand, are prevented from deposing on the pan bottom due to said air layer, thus avoiding any browning or at least avoiding any inhomogenous dehydration. On the other hand, the potato pieces are extraordinarily well singled by the turbulent air coming out from the above-immersing tubes, whereby at the same time, due to the hot air, a quite rapid dehydration and the desired expansion of the potato pieces is achieved.

By means of the very significant air velocity of between 2000 to 6000 m/minute, not only a steady movement of every single potato piece, e.g. potato chip and thereby an efficient singling is being assured, but also a quite satisfactory heat transfer onto the potato pieces is performed, so that, rather surprisingly, at relatively low temperatures of about 160°C an expansion of the potato pieces is taking place.

In a particularly preferred embodiment, the singling step b) and pre-drying step c) comprise the following procedure :
first the potato pieces are contacted with turbulent, hot air, having a temperature of about 260°C, and having an average air velocity of about 3500 m/minute, for about 2 minutes, and then
the potato pieces are contacted with turbulent, hot air, having a temperature of about 190°C and having an average air velocity of 3000 m/min., for about 2 minutes and 30 seconds, whereby
the potato pieces are simultaneously singled, dehydrated and expanded to yield a moisture content of about 5-10 % by weight, based on its dry weight.

In this particular embodiment which is performed in said "Jetzone" drying machine, an average coverage of potato pieces in said "Jetzone" drying machine of between 2-7 kg/m², preferably of 2.8 kg/m² and a distance of the lower grid in said drying machine being at a distance of about 2.5 cm and an upper grid distance of about 5 cm from the bottom should be assured first, when the temperature is at about 260°C, then at a temperature of about 190°C said coverage could be increased to about 8-20 kg/m² (on the basis of the weight of wet potato slices), preferably about 11 kg/m² and the upper grid is at about 6 cm and the lower grid of said drying machine was removed. The advantage of this embodiment consists in the fact that the singling step b) and pre-drying step c) of the inventive process could be performed at higher temperatures, thus reducing the necessary dehydrating periods and yield an excellent crisp texture of the product. Said grid in this embodiment is placed within said "Jetzone" drying machine in order to prevent the formation of wet zones within the potato pieces by improving a better singling by the turbulent hot air. Said upper grid of this preferred embodiment provides the advantage of providing only few space to the potato slices to be dehydrated, thus preventing them to fold.

In another preferred embodiment, the potato pieces are dried for about 4 minutes by turbulent, hot air of a temperature of about 160°C and a velocity of 4000 m/minute and thereafter for about another 4 minutes and 40 seconds by turbulent, hot air of about 160°C and a velocity of about 3000 m/minute and simultaneously singled while being dried to a final water content of 10 % by weight, based on the dry weight.

In the context of the final drying step d) regarding this second major embodiment of the present invention, where the expansion is achieved within the context of the - pre-drying step, the pre-dried potato pieces are further dehydrated by slow, preferably laminar, streaming hot air of a temperature of between 100 and 140°C, preferably 130°C for about 5 to 20 minutes, preferably about 10 minutes in order to yield a final moisture content of less than 4 % by weight.

Within said fourth step of the inventive process, a crispy character is added to the already airy texture of the product.

In this second major embodiment of the inventive process, the expansion of the potato pieces is already achieved in the context of the pre-drying step c), even at surprisingly low temperatures, whereas in the context of the first major embodiment of the inventive process, the expansion is achieved at relatively high temperatures in the context of the final-drying step d). A further advantage of the second embodiment of the procedure, i.e. the embodiment wherein the expansion is taking place in the context of the pre-drying step c) consists in the fact that, owing to the turbulent hot air, the potato pieces that are to be dried, e.g. potato slices are directly singled by means of the hot air stream, instead of being singled manually or by machines, thus providing a mono-layer. Thus, by means of the turbulent air stream the singling step and the pre-drying step are performed simultaneously so that the sticking together of potato pieces is efficiently prevented.

By the combination of the above set forth four procedural steps a) to d), i.e. the blanching, the singling of the potato pieces, the pre-drying and final drying steps and notably with the preferred temperature and time parameters, the objective of manufacturing dehydrated potato pieces having the same texture, bite and mouthfeel known for fried products, has been inventively resolved. By the inventive process, the traditional deep frying process could thus be imitated in the most optimal way.

In a further particularly preferred embodiment, the potato pieces are subjected to a sugaring procedure while being blanched.

A sugaring treatment in general terms is aiming at enriching the potato pieces with sugar. Potato pieces, e.g. potato chips or sticks that have been subjected to a sugaring treatment display a particularly crispy texture and an essentially improved mouthfeel after the inventive hot air expansion process. The sugar thereby plays the role of fat as an agent improving the mouthfeel, because, owing to its good and rapid water solubility, in contrast to starch, it facilitates the contact with the saliva. As said sugar penetrates rather easily into the potato pieces, it does not yield any annoying sweetness, as if it were to be sprayed onto said potato pieces as part of the flavor mixture at the end of the frying procedure.

In contrast to the simple application of sugar onto the dehydrated potato pieces, e.g. potato chips or sticks, the inventive method provides the possibility to enrich said chips or sticks with up to 20 % by weight of sugar based on the final products' weight, whereas said subsequent application of sugar would only provide low-fat sticks or chips having a maximum of 6 % by weight of sugar being attached to said potato pieces. The sugar treatment results in a reduction of the cellular pressure, thus decreasing the water content of the potato pieces (osmotic dehydration) whereas the dry substance content is increasing, so that an enrichment of the potato pieces, e.g. potato chips or sticks, of up to 20 % of sugar, preferably 6-8 % is possible, depending on the time of application. Despite a sugar content of about 8 % by weight chips or sticks being treated in such a way would still being felt as a salted product, despite a slightly sweet background mouthfeel. However, if a comparably small amount of sugar is being applied onto an already fried potato product, such an application with about 2-3 % of sugar would yield a product being essentially felt as a sweet product. Suitable sugars for being used in the inventive process are non-reducing sugars, e.g. compounds falling under the tradename Palatinit®, Isomalt and particularly Saccharose.

The sugar treatment is taking place within the context of the blanching step, whereby the application period of the potato pieces with sugar is to be calculated sufficiently long, preferably the blanching water is enriched with 1-5 % sugar and the potato pieces are treated for about 30 seconds up to 15 minutes in the blanching-sugar solution. It is particularly preferred that the blanching water is enriched with about 2-4 % sugar, and that the potato pieces are brought into contact with said blanching sugar solution for about 4 to 15 minutes.

Surprisingly, it was found that the potato pieces that have been treated with sugar, e.g. potato chips or sticks, do not at all caramelize at the usual hot air temperatures of about 100 to 320°C. It furthermore turned out that due to the sugar treatment as much sugar could penetrate into the potato pieces and stay in said potato pieces after having carried out the hot air expansion method, that finally an essentially more crispy texture and a better mouthfeel could be realized than with those products having not been submitted to any sugar treatment. The inventive sugar treatment of potato pieces could therefore comply with the ever growing demand of low-fat potato pieces, e.g. chips or sticks, by the consumer, whereby the product properties, notably the crispness and the bite are staying the same.

A comparison in terms of the calorie balance between commercially available fat-containing potato pieces, e.g. potato chips and sugar treated potato pieces shows that said balance is very clearly in favor of the sugar treatment. Sugar has a nutritive value of about 4 kcal per gram, thus being equivalent to the potato starch. In comparison to that, fat has a nutritive value of about 9 kcal per gram, which is more than twice of the value for sugar, so that the replacement of fat by sugar does have a substantial impact in the relation of few calories for the chips and sticks.

In order to still improve the singling mechanism and furthermore, in order to improve the taste of the dehydrated potato pieces, said pieces are subjected to an emulsion treatment prior to undergoing the singling and/or pre-drying step c). Said emulsion treatment comprises the immersion of said potato pieces into an oil-in-water emulsion for about 10 seconds to 2 minutes, preferably between 10 to 20 seconds at a temperature of about 60-90°C, preferably at about 85°C, while said emulsion preferably contains an emulsifier as well as flavoring soup ingredients (salt, HVP, yeast extracts, vegetable extracts etc.). The oil contained therein prevents the potato pieces from sticking together thus improving the ensuing singling step b) and furthermore provides a frying taste of the finished product. The oil-in-water emulsion usually contains between 0 to 35 % by weight of oil. In order to improve the texture, i.e. to make the product softer, said emulsion furthermore could contain 0.1 to 1 % by weight of a baking agent (e.g. potash).

After the inventive procedural steps a)-d) consisting of blanching, singling, dehydrating, i.e. pre-drying and final drying the potato pieces, whereby the blanching is carried out together with an optional sugar and emulsion treatment, a flavoring step could also optionally be performed after the final drying step d), thus improving the taste of the final product.

A further aspect of the present invention consists of the dehydrated potato pieces obtainable according to the above pointed out process in its two major embodiments. Thereby, the expansion of the potato pieces could be performed according to the first major embodiment within the context of the pre-drying or, within the context of the second major embodiment, in the final drying step.

In a preferred embodiment, the potato pieces are flat, riffle or wave cut potato pieces for the preparation of potato chips, preferably of a thickness of 1.2 to 2.3 mm. The inventive potato pieces also display, in a preferred embodiment, a sugar content of about 6-8 % by weight after the dehydrating process.

Furthermore, in another preferred embodiment, the dehydrated potato pieces display after the dehydrating process a water content of less than 4 % by weight.

In still a preferred embodiment, the finished, dehydrated and potentially flavored potato pieces have a fat content of about 2-20 % by weight, preferably between 4-5 % by weight. This very low fat content is due to the flavoring step, whereby the flavoring agents are suspended in a suitable oil or are solubilised in a corresponding solution, whereby said oil is being applied onto the dehydrated chips. This very low fat content is particularly suitable to assure a better attachment of flavoring compounds onto the potato pieces.

The final aspect of the present invention consists in the use of a dehydration facility on the basis of the above described "Jetzone" principle, for carrying out a hot air expansion in the context of a pre-drying step. Said facility comprises a continuous, closed pan or a non-perforated conveyor belt on which the potato pieces to be dehydrated, are being put, and whereby a huge number of tubes are immersing from above and are blowing hot air of a significant velocity. Said hot air hits on the bottom of the pan or on the non-perforated conveyor belt, thus generating, on the one hand, a bed of air for the potato pieces flying on top of said layer of air, on the other side, the air is being bounced back in a turbulent way, thus generating those turbulent conditions being desired for this singling step.

By said facility, the potato pieces on the one hand are prevented from deposing on the bottom of the pan due to said bed of air, whereby browning or at least inhomogeneous dehydration is prevented. On the other hand, by the turbulent air coming out of the tubes being arranged on top of the product, an excellent singling procedure of the potato pieces is assured, whereby simultaneously, the very same hot air is causing a dehydration and the desired expansion of the potato pieces.

By the considerable velocity of air of between 2000 and 6000 m/minute not only a constant motion of every single potato piece, e.g. potato chip, and therefore an efficient singling procedure is being assured, but also simultaneously, a satisfactory heat transfer onto said potato pieces, so that, quite surprisingly, at relatively low temperatures of about 160°C an expansion of the potato pieces is taking place.

After the expansion, the pre-dried potato pieces have to be subjected to the final drying step, so that equally dried products could be obtained.

The inventive process shall now be illustrated by means of examples.

### Example 1:

### Method for the preparation of hot air expanded potato chips, whereby the expansion is taking place within the context of the final drying step.

The potatoes are washed, peeled and cut into 1.5 mm riffle slices. Starch, sticking onto the surface is washed off with water. The chips are blanched and sugared for about 8 minutes at 85°C with a solution of 1 % salt and 3 % sugar. Thereafter, the blanched and sugared potato chips are allowed to drain and are singled, i.e. each of them is put onto a wire grid (thus forming a monolayer), and at first are dried for about 2 minutes at 200°C and afterwards for about 10 minutes at 130°C in order to yield a final water content of 25 % by weight. To finalize the pre-drying step, the potato chips are put into a drying facility for another hour at 48°C, whereby the humidity is adjusted to about 60 %. The final moisture content of the potato chips is amounting to about 10 % by weight.

In order to assure an equal distribution of moisture within the potato chips, said chips are stored for about 8 days at room temperature. In contrast to wet chips, the pre-dried chips are easily storable.

The pre-dried chips are then supplied into a hot air expander in batches of 400 g, whereby said facility is working according to the "Torbed" principle. The expansion is taking place at 285°C for about 30 seconds. Thereafter, the chips are flavored with a suspension of 4 % by weight of oil, based on the dry weight of the chips, and with 8 % by weight of seasoning.

Such potato chips have all the characteristics, i.e. the mouthfeel, the texture and the taste of traditional deep fried potato chips.

### Example 2:

### Method for the manufacturing of low-fat, hot air expanded potato chips, whereby the expansion is taking place within the context of the pre-drying step.

The potatoes are washed, peeled and cut into 1.5 mm thick riffle slices. Starch, sticking onto the surface is washed off with water. The chips are blanched and sugared for about 8 minutes at 85°C in a solution of 1 % salt and 2.5 % sugar. After the blanching, the drained off chips are brought into a "Wolverine Jetzone" drying facility, whereby the coverage is about 7 kg/m², and whereby said potato chips are at first dehydrated for about 4 minutes by turbulent, hot air of a temperature of about 160°C and a velocity of 4000 m/minute, and thereafter for another 6 minutes by turbulent, hot air having a temperature of about 120°C, and a velocity of 2500 m/minute, whereby said potato chips are at the very same time singled and expanded and dried to a final water content of 10%.

The pre-dried chips are then put in another drying facility and dehydrated at a temperature of 130°C for about 10 minutes to yield a final moisture content of 4 % by weight.

Finally, the chips having undergone the final drying step are subjected to a flavoring procedure applying a 4 % by weight oil, and 8 % by weight seasoning suspension.

The low-fat chips thus obtained are characterized by a particularly crispy texture and a quite comfortable mouthfeel.

### Example 3:

### Method for the manufacturing of low-fat, hot air expanded potato chips, whereby the expansion is taking place within the context of the pre-drying step.

The potatoes are washed, peeled and cut into 1.3 mm thick flat slices. Starch, sticking onto the surface is washed off with water. The chips are blanched for about 6 minutes at 85°C in water. Thereafter, the chips are placed for about 10 seconds in an oil-in-water emulsion having a temperature of about 85°C. For the preparation of said emulsion, an 8% high oleic sun-flower-oil was dispersed in an aqueous phase with the Panadan 165 (Danisco) emulsifier and a corresponding emulsifying device (Megatron MT 5000; Kinematica). In order to improve the taste and the texture, the emulsion was furthermore mixed with some vegetable soup and 0.3 % by weight of potash baking agent.

The drained-off chips are brought into a "Wolverine Jetzone" drying facility, whereby the coverage is about 2.8 kg/m², and whereby said potato chips are at first dehydrated from above for about 1 minute and 45 seconds by turbulent, hot air of a temperature of about 260°C and a velocity of 3500 m/minute. During this first drying phase (of the pre-drying step c), the chips are lying on the grid, being at a distance of about 2.5. cm from the bottom. The chips are prevented from flying away through a second covering grid being at a distance of about 5 cm.

In the second phase (still within the pre-drying step c), the coverage is 4 times higher than in the first drying phase. The chips are then dehydrated and expanded by turbulent, hot air having a temperature of about 190°C, and a velocity of 3000 m/minute, for another 2.5 minutes, whereby a final water content of about 5% was reached. During the second phase of the pre-drying step c), the chips were placed on the floor and a grid at a distance of 6 cm prevented them from flying away.

The chips were then dehydrated (final-drying step d) for about 10 minutes at 130°C to yield a final moisture content of 1 % by weight. The chips, thus obtained, display an oil content of about 5%.

Finally, the chips having undergone the final drying step are subjected to a flavoring procedure applying a 5 % by weight oil, and 8 % by weight seasoning suspension.

The low-fat chips thus obtained are characterized by a particularly crispy texture and a quite comfortable mouthfeel.

## Claims

1. Process for the manufacturing of low-fat, dehydrated potato pieces, wherein
the potato pieces to be dehydrated are subjected to
a) a blanching step
b) a singling step
c) a pre-drying step
d) a final drying step,
whereby in the course of the pre-drying step or in the course of the final drying step an expansion of the potato pieces is taking place, and whereby the pre-drying step and the final drying step are performed by means of hot air.

2. Process according to claim 1, wherein the expansion of the potato pieces is taking place within the context of the final drying step d).

3. Process according to claim 2, wherein the pre-drying step c) comprises the following procedure :
first the potato pieces are contacted with homogeneously flowing, essentially laminar, hot air, having a temperature of 160-220°C, for about 2-6 minutes, and
the potato pieces are then contacted with homogeneously flowing, essentially laminar, hot air, having a temperature of 80 to 150°C, for about 4-12 minutes
whereby the pre-dried potato pieces have a final moisture content of about 9 to 13 % by weight.

4. Process according to claim 2, wherein the potato pieces are contacted in the pre-drying step with homogeneously flowing, essentially laminar, hot air, having a temperature of about 80 to 150°C, for about 4-12 minutes, whereby the pre-dried potato pieces have a final moisture content of about 9 to 13 % by weight.

5. Process according to claim 3, wherein
the potato pieces are contacted with homogeneously flowing, essentially laminar, hot air, having a temperature of about 200°C, for about 4 minutes, and then
the potato pieces are contacted with homogeneously flowing, essentially laminar, hot air, having a temperature of about 100°C, for about 6 minutes and, furthermore
the potato pieces are contacted with homogeneously flowing, essentially laminar, hot air, having a temperature of about 48°C, for about 0.5 - 8 hours
whereby the pre-dried potato pieces have a final moisture content of about 10 % by weight.

6. Process according to claim 2, wherein the final-drying step d) is performed by rapidly flowing hot air having a temperature of between 265-295°C, for about 10 to 36 seconds in order to yield a moisture content of less than 4 % by weight.

7. Process according to claim 6, wherein the temperature is amounting to about 270°C.

8. Process according to claim 2, wherein prior to the final drying step d) a further intermediate storage step is carried out for at least 1 day.

9. Process according to claim 8, wherein the intermediate storage step is performed for about 7 days at room temperature.

10. Process according to claim 1, wherein the expansion of the potato pieces is taking place within the context of the pre-drying step c) and whereby the singling step b) and the pre-drying step c) are taking place essentially simultaneously.

11. Process according to claim 10, wherein the singling step b) and the pre-drying step c) comprise the following procedure :
first the potato pieces are contacted with turbulent, hot air, having a temperature of between 130-300°C and having an average air velocity of 1500-6000 m/min for about 1-8 minutes, and
the potato pieces are contacted with turbulent, hot air, having a temperature of between 100 to 200°C and having an average air velocity of 1500-5000 m/min. for about 1-10 minutes, whereby
the potato pieces are simultaneously singled, dehydrated and expanded to yield moisture content of about 4 to 35 % based on its dry weight.

12. Process according to claim 11, wherein the singling step b) and pre-drying step c) comprise the following procedure :
first the potato pieces are contacted with turbulent, hot air, having a temperature of about 240-270°C, and having an average air velocity of about 3000-4000 m/minute, for about 2 minutes, and
the potato pieces are contacted with turbulent, hot air, having a temperature of about 160-190°C and having an average air velocity of 2500-3500 m/min., for about 2-3 minutes, whereby
the potato pieces are simultaneously singled, dehydrated and expanded to yield moisture content of about 5-10 %, based on its dry weight.

13. Process according to claim 10, wherein during the singling step b) and pre-drying step c) the potato pieces are contacted with turbulent, hot air, having a temperature of between 100 to 200°C and having an average air velocity of 1500-6000 m/min. for about 4-18 minutes, whereby the potato pieces are simultaneously singled, dehydrated and expanded to yield moisture content of about 4 to 35 % based on its dry weight.

14. Process according to claim 10, wherein the final drying step d) is performed by homogeneously and slowly flowing, essentially laminar, hot air, having a temperature of about 100 to 140°C for about 5 to 20 minutes, thus yielding a product having a final moisture content of less than 4 % by weight.

15. Process according to claim 14, wherein the final drying step d) is performed by homogeneously and slowly flowing, essentially laminar, hot air, having a temperature of about 130°C, for about 10 minutes.

16. Process according to claim 1, wherein the blanching step is performed for about 30 seconds to 15 minutes at a temperature of between 70 to 100°C.

17. Process according to claim 1, wherein the blanching step is performed for about 4-12 minutes.

18. Process according to claim 1, wherein the blanching step is performed at a temperature of between 80 to 95°C.

19. Process according to claim 1, wherein the potato pieces to be dehydrated are subjected to a sugaring treatment during the blanching step a).

20. Process according to claim 19, wherein for the sugaring procedure non-reducing sugars, preferably a Saccharose is utilized.

21. Process according to claim 1, wherein the potato pieces to be dehydrated are subjected to an emulsion treatment after the blanching step a).

22. Process according to claim 21, wherein said emulsion treatment is performed by immersing the potato pieces to be dehydrated into an oil-in water-emulsion containing flavored soup ingredients for about 10 to 20 seconds at a temperature of about 60-90°C.

23. Process according to claim 22, wherein said emulsion also contains a baking agent.

24. Process according to claim 1, wherein the potato pieces are subjected to a flavoring step after the final drying step d).

25. Dehydrated potato pieces, obtainable according to the process following to any one of the claims 1 to 24.

26. Potato pieces according to claim 25, wherein the potato pieces contain or consist of potato chips, having a thickness of 1.4 to 2.3 mm or potato sticks, having a thickness of 1 to 3 mm.

27. Potato pieces according to claim 25, wherein said potato pieces have a sugar content after the dehydrating steps of about 5-10 % by weight.

28. Potato pieces according to claim 25, wherein the dehydrated potato pieces have a water content of less than 4 % by weight.

29. Potato pieces according to claim 25, wherein said potato pieces have a fat content of between 2 to 12 % by weight, preferably between 4-5 % by weight.

30. Use of a dehydrating device comprising a continuously advancing pan or a non-perforated conveyor belt on which the potato pieces to be dried are placed and whereby from the top, out of a variety of tubes immersing into said pan, hot and turbulent air is entering with high velocity, thus forming an air bed for the potato pieces to float on, for performing the process according to claim 1.

31. Process for the manufacturing of low-fat dehydrated potato pieces according to claim 1, wherein a dehydrating device comprising a continuously advancing pan or a non-perforated conveyor belt on which the potato pieces to be dried are placed and whereby from the top, out of a variety of tubes immersing into said pan, hot and turbulent air is entering with high velocity, thus forming an air bed for the potato pieces to float on, is used.

## Patentansprüche

1. Verfahren zur Herstellung von fettarmen, dehyratisierten Kartoffelstückchen, wobei die zu dehydratisierenden Kartoffelstückchen
a. einem Blanchierschritt
b. einem Vereinzelungsschritt
c. einem Vortrocknungschritt
d. einem Endtrocknungsschritt
unterworfen werden, wobei im Verlauf des Vortrocknungsschritts oder im Verlauf des Endtrocknungsschritts eine Expansion der Kartoffelstückchen stattfindet und wobei der Vortrocknungsschritt und der Endtrocknungsschritt mittels heisser Luft durchgeführt werden.

2. Verfahren gemäss Anspruch 1, wobei die Expansion der Kartoffelstückchen im Zusammenhang mit dem Endtrocknungsschritts d) stattfindet.

3. Verfahren gemäss Anspruch 2, wobei der Vortrocknungsschritt c) das folgende Vorgehen umfasst:
die Kartoffelstückchen werden zuerst mit gleichmässig fliessender, im wesentlichen laminarer, heisser Luft mit einer Temperatur von 160-220°C für ungefähr 2-6 Minuten in Kontakt gebracht und
die Kartoffelstückchen werden danach mit gleichmässig fliessender, im wesentlichen laminarer, heisser Luft mit einer Temperatur von 80-150°C für ungefähr 4-12 Minuten in Kontakt gebracht, wobei die vorgetrockneten Kartoffelstückchen einen Feuchteendgehalt von ungefähr 9 bis 13 Gew.-% aufweisen.

4. Verfahren gemäss Anspruch 2, wobei die Kartoffelstückchen im Vortrocknungsschritt mit gleichmässig fliessender, im wesentlichen laminarer, heisser Luft mit einer Temperatur von 80-150°C für ungefähr 4-12 Minuten in Kontakt gebracht werden, wobei die vorgetrockneten Kartoffelstückchen einen Feuchteendgehalt von ungefähr 9 bis 13 Gew.-% aufweisen.

5. Verfahren gemäss Anspruch 3, wobei die Kartoffelstückchen mit gleichmässig fliessender, im wesentlichen laminarer, heisser Luft mit einer Temperatur von ungefähr 200°C für ungefähr 4 Minuten in Kontakt gebracht werden und danach
die Kartoffelstückchen mit gleichmässig fliessender, im wesentlichen laminarer, heisser Luft mit einer Temperatur von ungefähr 100°C für ungefähr 6 Minuten in Kontakt gebracht werden, und zudem
die Kartoffelstückchen mit gleichmässig fliessender, im wesentlichen laminarer, heisser Luft mit einer Temperatur von ungefähr 48°C für ungefähr 0.5-8 Stunden in Kontakt gebracht werden,
wobei die vorgetrockneten Kartoffelstückchen einen Feuchteendgehalt von ungefähr 10 Gew.-% aufweisen.

6. Verfahren gemäss Anspruch 2, wobei der Endtrocknungsschritt d) mittels schnell fliessender heisser Luft mit einer Temperatur von zwischen 265-295°C, für ungefähr 10 bis 36 Sekunden durchgeführt wird, um einen Feuchtegehalt von weniger als 4 Gew.-% zu ergeben.

7. Verfahren gemäss Anspruch 6, wobei die Temperatur sich auf ungefähr 270°C beläuft.

8. Verfahren gemäss Anspruch 2, wobei vor dem Endtrocknungschritt d) ein weiterer zwischenlagerschritt für mindestens 1 Tag ausgeführt wird.

9. Verfahren gemäss Anspruch 8, wobei der Zwischenlagerschritt für ungefähr 7 Tage bei Raumtemperatur ausgeführt wird.

10. Verfahren gemäss Anspruch 1, wobei die Expansion der Kartoffelstückchen im Zusammenhang mit dem Vortrocknungsschritt c) stattfindet und wobei der Vereinzelungsschritt b) und der Vortrocknungsschritt c) im wesentlichen gleichzeitig stattfinden.

11. Verfahren gemäss Anspruch 10, wobei der Vereinzelungsschritt b) und der Vortrocknungsschritt c) das folgende Vorgehen umfassen:
die Kartoffelstückchen werden zuerst mit turbulenter, heisser Luft mit einer Temperatur von zwischen 130-300°C und einer durchschnittlichen Luftgeschwindigkeit von 1500-6000 m/min für ungefähr 1-8 Minuten in Kontakt gebracht, und
die Kartoffelstückchen werden mit turbulenter, heisser Luft mit einer Temperatur von zwischen 100 bis 200°C und einer durchschnittlichen Luftgeschwindigkeit von 1500-5000 m/min für ungefähr 1-10 Minuten in Kontakt gebracht, wobei
die Kartoffelstückchen gleichzeitig vereinzelt, dehydratisiert und expandiert werden, um einen Feuchtegehalt von ungefähr 4 bis 35 % bezogen auf ihr Trockengewicht zu ergeben.

12. Verfahren gemäss Anspruch 11, wobei der Vereinzelungsschritt b) und der Vortrocknungsschritt c) das folgende Vorgehen umfassen:
die Kartoffelstückchen werden zuerst mit turbulenter, heisser Luft mit einer Temperatur von zwischen 240-270°C und einer durchschnittlichen Luftgeschwindigkeit von 3000-4000 m/min für ungefähr 2 Minuten in Kontakt gebracht, und
die Kartoffelstückchen werden mit turbulenter, heisser Luft mit einer Temperatur von zwischen 160-190°C und einer durchschnittlichen Luftgeschwindigkeit von 2500-3500 m/min für ungefähr 2-3 Minuten in Kontakt gebracht, wobei
die Kartoffelstückchen gleichzeitig vereinzelt, dehydratisiert und expandiert werden, um einen Feuchtegehalt von ungefähr 5-10 % bezogen auf ihr Trokkengewicht zu ergeben.

13. Verfahren gemäss Anspruch 10, wobei während dem Vereinzelungsschritt b) und dem Vortrocknungsschritt c) die Kartoffelstückchen mit turbulenter, heisser Luft mit einer Temperatur von zwischen 100 bis 200°C und einer durchschnittlichen Luftgeschwindigkeit von 1500-6000 m/min für ungefähr 4-18 Minuten in Kontakt gebracht werden, wobei
die Kartoffelstückchen gleichzeitig vereinzelt, dehydratisiert und expandiert werden, um einen Feuchtegehalt von ungefähr 4 bis 35 % bezogen auf ihr Trockengewicht zu ergeben.

14. Verfahren gemäss Anspruch 10, wobei der Endtrocknungsschritt d) mittels homogen und langsam fliessender, im wesentlichen laminarer, heisser Luft mit einer Temperatur von 100 bis 140°C für ungefähr 5 bis 20 Minuten durchgeführt wird, was ein Produkt ergibt, welches einen Feuchteendgehalt von weniger als 4 Gew.-% aufweist.

15. Verfahren gemäss Anspruch 14, wobei der Endtrocknungsschritt d) mittels homogen und langsam fliessender, im wesentlichen laminarer, heisser Luft mit einer Temperatur von ungefähr 130°C für ungefähr 10 Minuten durchgeführt wird.

16. Verfahren gemäss Anspruch 1, wobei der Blanchierschritt für ungefähr 30 Sekunden bis 15 Minuten bei einer Temperatur von zwischen 70 bis 100°C durchgeführt wird.

17. Verfahren gemäss Anspruch 1, wobei der Blanchierschritt für ungefähr 4-12 Minuten durchgeführt wird.

18. Verfahren gemäss Anspruch 1, wobei der Blanchierschritt bei einer Temperatur von zwischen 80 bis 95°C durchgeführt wird.

19. Verfahren gemäss Anspruch 1, wobei die zu dehydratisierenden Kartoffelstückchen während dem Blanchierschritt a) einer Zuckerbehandlung unterworfen werden.

20. Verfahren gemäss Anspruch 19, wobei für den Zuckerungsvorgang nicht-reduzierende Zucker, bevorzugt Saccharose, verwendet werden.

21. Verfahren gemäss Anspruch 1, wobei die zu dehydratisierenden Kartoffelstückchen nach dem Blanchierschritt a) einer Emulsionsbehandlung unterworfen werden.

22. Verfahren gemäss Anspruch 21, wobei die Emulsionsbehandlung durch Eintauchen der zu dehydratisierenden Kartoffelstückchen in eine Öl-in-Wasser Emulsion, welche gewürzte Suppenbestandteile enthält, für ungefähr 10 bis 20 Sekunden bei einer Temperatur von ungefähr 60-90°C durchgeführt wird.

23. Verfahren gemäss Anspruch 22, wobei die Emulsion auch ein Backtriebmittel enthält.

24. Verfahren gemäss Anspruch 1, wobei die Kartoffelstückchen nach dem Endtrocknungsschritt d) einem Würzschritt unterzogen werden.

25. Dehydratisierte Kartoffelstückchen, welche durch das Verfahren gemäss einem der Ansprüche 1 bis 24 erhältlich sind.

26. Kartoffelstückchen gemäss Anspruch 25, wobei die Kartoffelstückchen Kartoffelchips, welche eine Dicke von 1.4 bis 2.3 mm aufweisen, oder Kartoffelstäbchen, welche eine Dicke von 1 bis 3mm aufweisen, enthalten oder daraus bestehen.

27. Kartoffelstückchen gemäss Anspruch 25, wobei die Kartoffelstückchen nach den Dehydratisierungsschritten einen Zuckergehalt von ungefähr 5-10 Gew.-% aufweisen.

28. Kartoffelstückchen gemäss Anspruch 25, wobei die dehydratisierten Kartoffelstückchen eine Wassergehalt von weniger als 4 Gew.-% aufweisen.

29. Kartoffelstückchen gemäss Anspruch 25, wobei die Kartoffelstückchen einen Fettgehalt von zwischen 2 bis 12 Gew.-%, bevorzugt 4-5 Gew.-%, aufweisen.

30. Verwendung einer Dehydratisierungsvorrichtung umfassend eine kontinuierlich betriebene abgeschlossene Wanne oder ein nicht perforiertes Förderband, auf welches die zu trocknenden Kartoffelstückchen gegeben werden, und wobei durch von oben in die Wanne eintauchende Rohre heisse und turbulente Luft mit grosser Geschwindigkeit zugeführt wird, was zur Bildung eines Luftbetts führt, auf welchem die Kartoffelstückchen schwimmen, zur Durchführung des Verfahrens gemäss Anspruch 1.

31. Verfahren zur Herstellung fettarmer, dehydratisierter Kartoffelstückchen gemäss Anspruch 1, wobei eine Dehydratisierungsvorrichtung umfassend eine kontinuierlich betriebene abgeschlossene Wanne oder ein nicht perforiertes Förderband, auf welches die zu trocknenden Kartoffelstückchen gegeben werden, und wobei durch von oben in die Wanne eintauchende Rohre heisse und turbulente Luft mit grosser Geschwindigkeit zugeführt wird, was zur Bildung eines Luftbetts führt, auf welchem die Kartoffelstückchen schwimmen, verwendet wird.

## Revendications

1. Procédé de fabrication de morceaux de pommes de terre déshydratés à faible teneur en graisse, dans lequel
les morceaux de pommes de terre à déshydrater sont soumis à :
a) une opération de blanchiment
b) une opération de séparation
c) une opération de préséchage
d) une opération de séchage final,
dans lequel, au cours de l'opération de préséchage ou de l'opération de séchage final a lieu une dilatation des morceaux de pommes de terre, et l'opération de préséchage et l'opération de séchage final sont effectuées au moyen d'air chaud.

2. Procédé selon la revendication 1, dans lequel la dilatation des morceaux de pommes de terre a lieu dans le cadre de l'opération de séchage final d).

3. Procédé selon la revendication 2, dans lequel l'opération de préséchage c) comprend les étapes suivantes :
d'abord, de l'air chaud essentiellement laminaire s'écoulant uniformément et ayant une température de 160 à 220 °C est mis en contact pendant environ 2 à 6 minutes avec les morceaux de pommes de terre, et
de l'air chaud essentiellement laminaire s'écoulant uniformément et ayant une température de 80 à 150 °C est mis en contact pendant environ 4 à 12 minutes avec les morceaux de pommes de terre,
de sorte que les morceaux de pommes de terre préséchés ont une teneur finale en humidité d'environ 9 à 13 % en poids.

4. Procédé selon la revendication 2, dans lequel de l'air chaud essentiellement laminaire s'écoulant uniformément et ayant une température d'environ 80 à 150°C est mis en contact pendant environ 4 à 12 minutes avec les morceaux de pommes de terre, de sorte que les morceaux de pommes de terre préséchés ont une teneur finale en humidité d'environ 9 à 13 % en poids.

5. Procédé selon la revendication 3, dans lequel
de l'air chaud essentiellement laminaire s'écoulant uniformément et ayant une température d'environ 200 °C est mis en contact pendant environ 4 minutes avec les morceaux de pommes de terre, et ensuite,
de l'air chaud essentiellement laminaire s'écoulant uniformément et ayant une température d'environ 200 °C est mis en contact pendant environ 4 minutes avec les morceaux de pommes de terre, et ensuite,
de l'air chaud essentiellement laminaire s'écoulant uniformément et ayant une température d'environ 100 °C est mis en contact pendant environ 6 minutes avec les morceaux de pommes de terre et, en outre,
de l'air chaud essentiellement laminaire s'écoulant uniformément et ayant une température d'environ 48 °C est mis en contact pendant environ 0,5 à 8 heures avec les morceaux de pommes de terre,
de sorte que les morceaux de pommes de terre préséchés ont une teneur finale en humidité d'environ 10 % en poids.

6. Procédé selon la revendication 2, dans lequel l'opération de séchage final d) est effectuée par écoulement rapide pendant environ 10 à 36 secondes d'air chaud ayant une température comprise entre 265 et 295 °C, pour l'obtention d'une teneur en humidité inférieure à 4 % en poids.

7. Procédé selon la revendication 6, dans lequel la température est d'environ 270 °C.

8. Procédé selon la revendication 2, dans lequel est effectuée avant l'opération de séchage final d) une opération supplémentaire de stockage intermédiaire durant au moins 1 jour.

9. Procédé selon la revendication 8, dans lequel l'opération de stockage intermédiaire est effectuée pendant environ 7 jours à la température ambiante.

10. Procédé selon la revendication 1, dans lequel la dilatation des morceaux de pommes de terre a lieu dans le cadre de l'opération de préséchage c), et l'opération de séparation b) et l'opération de préséchage c) ont lieu essentiellement en même temps.

11. Procédé selon la revendication 10, dans lequel l'opération de séparation b) et l'opération de préséchage c) comprennent les étapes suivantes :
d'abord, de l'air chaud turbulent ayant une température comprise entre 130 et 300 °C et une vitesse moyenne de 1500 à 6000 m/mn est mis en contact pendant environ 1 à 8 minutes avec les morceaux de pommes de terre, et
de l'air chaud turbulent ayant une température comprise entre 100 et 200°C et une vitesse moyenne de 1500 à 5000 m/mn est mis en contact pendant environ 1 à 10 minutes avec les morceaux de pommes de terre,
de sorte que les morceaux de pommes de terre sont en même temps séparés, déshydratés et dilatés pour acquérir une teneur en humidité basée sur leur poids sec d'environ 4 à 35 %.

12. Procédé selon la revendication 11, dans lequel l'opération de séparation b) et l'opération de préséchage c) comprennent les étapes suivantes :
d'abord, de l'air chaud turbulent ayant une température d'environ 240 à 270 °C et une vitesse moyenne de 3000 à 4000 m/mn est mis en contact pendant environ 2 minutes avec les morceaux de pommes de terre, et
de l'air chaud turbulent ayant une température d'environ 160 à 190 °C et une vitesse moyenne de 2500 à 3500 m/mn est mis en contact pendant environ 2 à 3 minutes avec les morceaux de pommes de terre,
de sorte que les morceaux de pommes de terre sont en même temps séparés, déshydratés et dilatés pour acquérir une teneur en humidité basée sur leur poids sec d'environ 5 à 10 %.

13. Procédé selon la revendication 10, dans lequel, pendant l'opération de séparation b) et l'opération de préséchage c), de l'air chaud turbulent ayant une température comprise entre 100 et 200 °C et une vitesse moyenne de 1500 à 6000 m/mn est mis en contact pendant environ 4 à 18 minutes avec les morceaux de pommes de terre, de sorte que les morceaux de pommes de terre sont en même temps séparés, déshydratés et dilatés pour acquérir une teneur en humidité basée sur leur poids sec d'environ 4 à 35 %.

14. Procédé selon la revendication 10, dans lequel l'opération de séchage final d) est effectuée pendant environ 5 à 20 minutes avec de l'air chaud essentiellement laminaire s'écoulant uniformément et lentement et ayant une température d'environ 100 à 140 °C, ce qui donne un produit ayant une teneur finale en humidité inférieure à 4 % en poids.

15. Procédé selon la revendication 14, dans lequel l'opération de séchage final d) est effectuée pendant environ 10 minutes avec de l'air chaud essentiellement laminaire s'écoulant uniformément et lentement et ayant une température d'environ 130°C.

16. Procédé selon la revendication 1, dans lequel l'opération de blanchiment est effectuée pendant environ 30 secondes à 15 minutes à une température comprise entre 70 et 100 °C.

17. Procédé selon la revendication 1, dans lequel l'opération de blanchiment est effectuée pendant environ 4 à 12 minutes.

18. Procédé selon la revendication 1, dans lequel l'opération de blanchiment est effectuée à une température comprise entre 80 et 95 °C.

19. Procédé selon la revendication 1, dans lequel les morceaux de pommes de terre à déshydrater sont soumis pendant l'opération de blanchiment a) à un traitement de sucrage.

20. Procédé selon la revendication 19, dans lequel sont utilisés pour le traitement de sucrage des sucres non réducteurs, de préférence un saccharose.

21. Procédé selon la revendication 1, dans lequel les morceaux de pommes de terre à déshydrater sont soumis après l'opération de blanchiment a) à un traitement par émulsion.

22. Procédé selon la revendication 21, dans lequel le traitement par émulsion est effectué par immersion pendant environ 10 à 20 secondes des morceaux de pommes de terre à déshydrater dans une émulsion type huile dans l'eau contenant des ingrédients de soupe parfumés et ayant une température d'environ 60 à 90°C.

23. Procédé selon la revendication 22, dans lequel l'émulsion contient aussi un agent de cuisson.

24. Procédé selon la revendication 1, dans lequel les morceaux de pommes de terre sont soumis après l'opération de séchage final d) à une opération d'assaisonnement.

25. Morceaux de pommes de terre déshydratés obtenus par le procédé d'une quelconque des revendications 1 à 24.

26. Morceaux de pommes de terre selon la revendication 25 qui contiennent des chips ou sont constitués de chips ayant une épaisseur de 1,4 à 2,3 mm ou contiennent des bâtons de pommes de terre ou sont constitués de tels bâtons ayant une épaisseur de 1 à 3 mm.

27. Morceaux de pommes de terre selon la revendication 25 qui ont après les opérations de déshydratation une teneur en sucre d'environ 5 à 10 % en poids.

28. Morceaux de pommes de terre selon la revendication 25 qui ont une teneur en eau inférieure à 4 % en poids.

29. Morceaux de pommes de terre selon la revendication 25 qui ont une teneur en graisse comprise entre 2 et 12 % en poids, de préférence entre 4 et 5 % en poids.

30. Utilisation pour l'exécution du procédé de la revendication 1 d'un dispositif de déshydratation comprenant un plat avançant de façon continue ou une courroie transporteuse non perforée sur lequel ou laquelle les morceaux de pommes de terre à sécher sont placés, de l'air chaud et turbulent sortant de divers tubes plongeant dans le plat, entrant d'en haut à grande vitesse pour former un lit d'air sur lequel les morceaux de pommes de terre flottent.

31. Procédé de fabrication de morceaux de pommes de terre déshydratés à faible teneur en graisse selon la revendication 1, dans lequel est utilisé un dispositif de déshydratation comprenant un plat avançant de façon continue ou une courroie transporteuse non perforée sur lequel ou laquelle les morceaux de pommes de terre à sécher sont placés, de l'air chaud et turbulent sortant de divers tubes plongeant dans le plat, entrant d'en haut à grande vitesse pour former un lit d'air sur lequel les morceaux de pommes de terre flottent.
